# EUROPEAN PATENT SPECIFICATION

(11) **EP 0 751 457 B1**
(45) Date of publication and mention of the grant of the patent: **21.05.2003**
(21) Application number: 95830278.8
(22) Date of filing: 30.06.1995
(51) Int. Cl.: G06F 7/02

(54) **Basic cell for comparing a first and a second digital signal to each other and relating digital comparator**
Basiszelle zum Vergleichen eines ersten und eines zweiten digitalen Signals und entsprechender digitaler Komparator
Cellule de base pour comparer un premier et un deuxième signal digital l'un à l'autre et comparateur digital associé

(43) Date of publication of application: 02.01.1997
(73) Proprietor: STMicroelectronics S.r.l., 20041 Agrate Brianza (Milano) (IT)
(72) Inventor: Gadducci, Paolo, I-20010 Bareggio, (Milano) (IT); Moloney, David, Dublin 8 (IE); Brianti, Francesco, I-29100 Piacenza (IT); Pisati, Valerio, I-27049 Bosnasco, (Pavia) (IT)
(74) Representative: Botti, Mario

(56) References cited:
- EP-A- 0 291 963
- EP-A- 0 319 421
- US-A- 4 903 005
- PATENT ABSTRACTS OF JAPAN vol. 010 no. 132 (P-456) ,16 May 1986 & JP-A-60 254233 (NIPPON DENKI KK) 14 December 1985,
- PATENT ABSTRACTS OF JAPAN vol. 011 no. 324 (P-628) ,22 October 1987 & JP-A-62 109124 (NEC CORP) 20 May 1987,

## Description

### Field of application

This invention relates to a digital comparator according to the preamble of claim 1.

The invention also relates to a digital comparator for comparing a first and a second digital signal, having at least one first and one second input terminal and at least one incremental output and out equalising output and comprising a chain of identical cells connected to a first and a second data bus for transmitting the said first and second digital signals.

The invention relates in particular, but not exclusively, to a three bit digital comparator and the description which follows is made with reference to this example application solely for the purpose of simplifying the description.

### Prior art

As is well known, the technique currently used to compare two digital signals comprises evaluating the sign of the result of their subtraction.

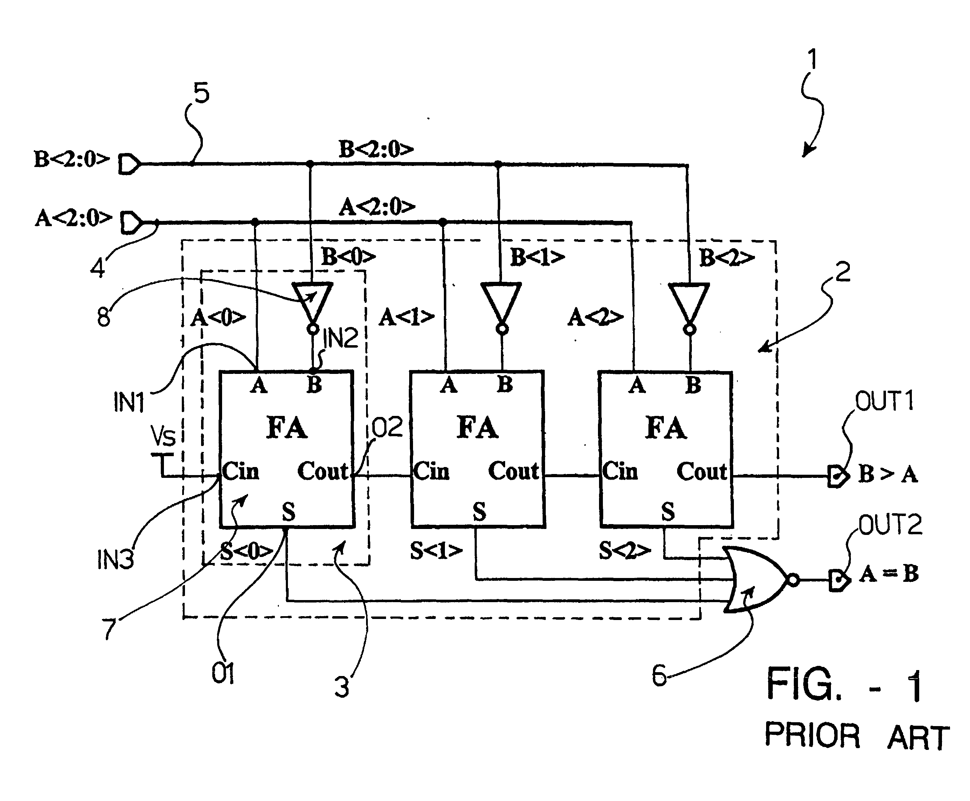

A digital comparator of the known type is shown for example in Figure 1. This comparator 1 is indicated as a whole by the number 1 and comprises a chain 2 of inserted cells 3, in parallel with each other, between a first 4 and a second 5 data bus and a logic gate 6 of the NOR type.

In particular, in the example illustrated in Figure 1, comparator 1 is a three bit comparator and therefore comprises three cells 3 and one logic gate 6 with three inputs.

Each basic cell 3 incorporated in comparator 1 comprises a summator 7 of the Full Adder type having a first input terminal IN 1 connected to the first data bus 4 and a second input terminal IN 2 connected to the second data bus 5 via a buffer 8, as well as an output terminal O1 connected to logic gate 6.

Data buses 4 and 5 respectively carry a first digital signal A and a second B, in particular a three bit signal.

Each Full Adder summator 7 has a further input terminal IN3 which receives an input reference signal Cin and a further output terminal 02 which generates an output reference signal Cout. The latter becomes the reference input signal for the summator in the next cell along in chain 2.

The first cell in chain 2 receives a voltage value V_{S} corresponding to a high logic value or logic "1" at input terminal IN3, while the last cell in chain 2 provides a high logic value at its output terminal 02, which coincides with a first output terminal OUT1 of digital comparator 1, when digital signal B has a logic value greater than digital signal A.

Digital comparator 1 has a second output terminal OUT2, which coincides with the output terminal from logic gate 6, which provides a high logic value when signals A and B coincide.

The principal limit to this known arrangement is its response time, which increases, as in all known summators, as the number of bits making up the signals A and B under comparison increases.

This disadvantage is particularly unfavourable in high frequency applications, which require short transit times for signals through the digital comparator.

In order to overcome this disadvantage Full Adder summators constructed using large transistors, thus able to switch in a short time, have to be used.

This however increases the area occupied by digital comparator 1, and the costs of manufacturing it increase.

EP 0 291 963 is an example of prior art that tries to speed the operation of a fast adder by including a passgate structure. In that circuit, if the inputs A and B are dissimilar, the same carry in signal Cin received at the circuit is sent as the carry out signal Cout, having first passed through the passgate. This circuit configuration, however, causes the actual carry signal to be negated. This in turn requires at least two dissimilar cells to be used in making a chain of cells, to compensate for the negated carry signal.

US Patent 4,903,005 is directed to a comparator circuit that also includes a passgate. In that circuit, if the two input data A and B match, the carry input data from the previous cell is output as the carry output data for the particular cell. However, that circuit uses three separate outputs to signal the equality of A and B, and requires the use of transistors external to the cells to implement the output signals.

A Japanese patent abstract Vol 011 Number 324, publication number JP62109124 is directed to a comparator having repeatable cells. This circuit, however, suffers from latency problems in propagating the carry in signal CI to the carry out signal CO when inputs A and B are identical, as the datapath through the cell is convoluted. Additionally, there is no dedicated cell output for when A=B, which can cause different signal outputs dependant on the original carry in signal CI applied to the first cell.

Japanese patent abstract vol 010, Number 132, publication number JP 60 254 233 also discloses a comparator with repeatable cells. The conditions A > B and A < B are evaluated by controlling two pass transistors with a logic XNOR function. The condition A = B is not provided.

The technical problem underlying this invention is that of devising a digital comparator having structural and functional characteristics which enable it to overcome the disadvantages which still limit comparators constructed according to the known art.

### Summary of the invention

The invention is defined by claims 1 and 14. The concept underlying this invention is that of providing a series of identical basic cells which incorporate transistors of the pass-gate type in order to indicate equality between the digital signal inputs.

On the basis of this concept the technical problem is resolved by means of a digital comparator which comprises a plurality of cells defined in the characterising part of claim 1 and subsequent claims.

The features and advantages of the basic cell and the comparator according to the invention will be apparent from the description below of embodiments given by way of non-restrictive illustration with reference to the appended drawings.

### Brief description of the drawings

In these drawings:
- Figure 1 illustrates a digital comparator constructed according to the known art,
- Figure 2 illustrates diagrammatically a digital comparator constructed according to the invention,
- Figure 3 illustrates a basic cell incorporated in the digital comparator in Figure 2,
- Figure 4 shows a variant embodiment of the basic cell in Figure 3,
- Figure 5 shows in detail the electrical diagram for the basic cell in Figure 4.

### Detailed description

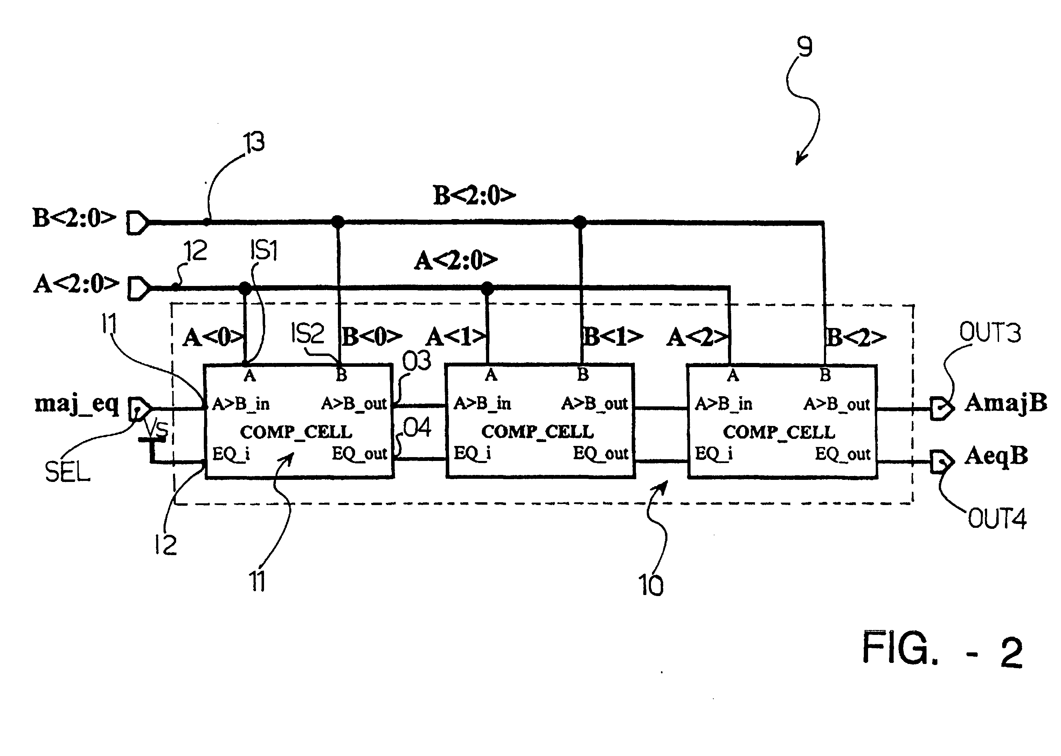

With reference to these figures and in particular Figure 2, 9 indicates a digital comparator constructed according to the invention as a whole.

Digital comparator 9 comprises a chain 10 of cells 11, each of which have a first signal input IS1 and a second signal input IS2 connected respectively to a first 12 and a second 13 data bus, which are designed to transmit digital input signals A and B.

Each basic cell 11 also comprises an incremental input I1 and an incremental output 03 connected to the incremental input of the subsequent cell in chain 10, together with an equalising input I2 and an equalising output 04 connected to the equalising input of the next cell in chain 10.

The first cell in chain 10 receives a switching signal SEL at incremental input I1 and receives a voltage value V_{S} corresponding to a high logic value or logic "1" at equalising input I2.

Digital comparator 1 has a first output terminal OUT3, which coincides with the incremental output 03 of the last cell in chain 10. Output terminal OUT3 adopts a high logic value when digital signal A is greater than digital signal B.

A second output terminal OUT4, which coincides with the equalising output 04 of the last cell in chain 10, instead adopts a high logic value when signals A and B coincide.

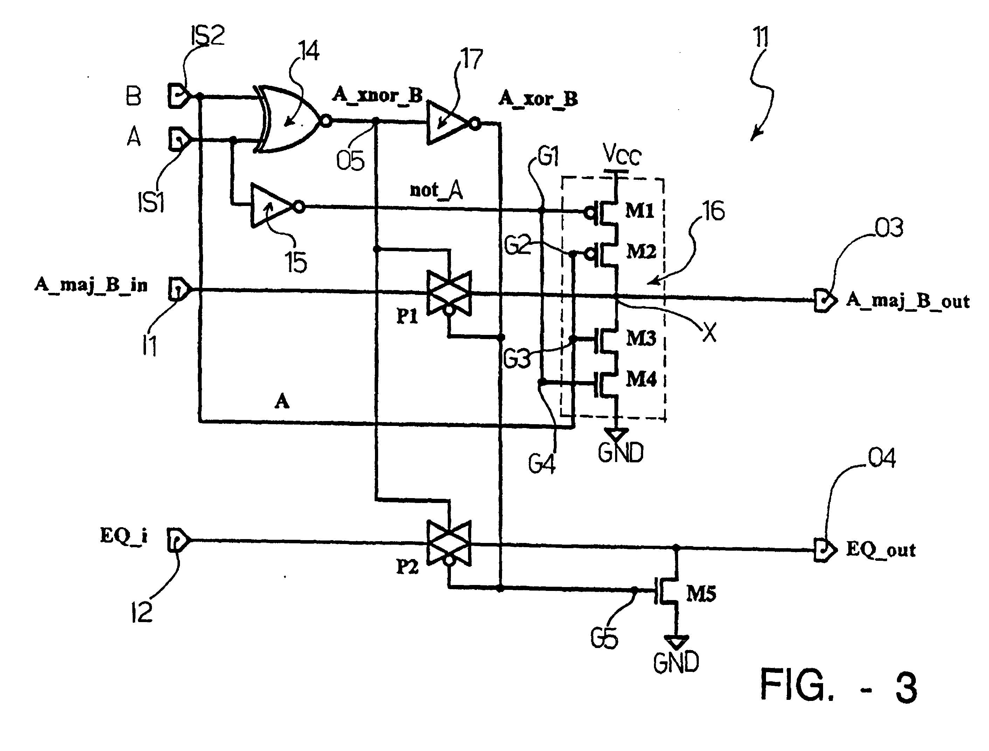

Now with particular reference to Figure 3, each basic cell 11 comprises a logic gate 14 of the XNOR type, having a first input which coincides with the first signal input IS1 of cell 11 and receives first digital signal A and a second input which coincides with the second signal input IS2 of cell 11 and receives second digital signal B.

First signal input IS1 is also connected through an inverter or buffer 15 to a divider 16 of transistors M1, M2, M3 and M4, inserted between a first supply reference voltage Vcc and a second reference voltage, in particular an earth GND.

Divider 16 comprises the series of a first M1 and a second M2 P channel MOS transistor inserted between supply reference voltage Vcc and incremental output 03 of cell 11. A third M3 and a fourth M4 N channel MOS transistor are instead inserted between this output 03 and earth GND.

First transistor M1 and fourth transistor M4 have control terminals, G1 and G4 respectively, connected together and to the first signal input IS1 via buffer 15. Similarly second transistor M2 and third transistor M3 have control terminals, G2 and G3 respectively, connected together and to second signal input IS2 of cell 11.

Incremental input I1 of cell 11 is connected to incremental output 03 via a first pass-transistor P1 or a pass-gate depending on the technology used, which is inserted between output 05 of logic gate 14 and a control terminal G5 of a further N channel MOS transistor M5 in parallel with a further buffer 17 and a second pass-transistor P2.

Transistor M5 is inserted between equalising output 04 of cell 11 and earth GND.

Equalising input I2 is connected to equalising output O4 of cell 11 via the second pass transistor P2.

We will now see how cell 11 operates according to the invention.

When input signals A and B are equal, pass-transistors P1 and P2 are activated and transfer the relative values of the output from the preceding cell in chain 10 of digital comparator 9 to outputs 03 and 04.

These values, which are present at inputs I1 and I2 of cell 11 are in fact the results of a comparison relating to the bits of lower weight of digital signals A and B.

When on the other hand input signals A and B are different, pass-transistors P1 and P2 are kept inactive by transistors M1 and M5 which force outputs 03 and 04 to the correct values.

Pass-transistors P1 and P2 therefore essentially operate as control switches.

The initial cell in chain 10 of digital comparator 9 receives switching signal SEL at incremental input I1.

Advantageously, according to the invention, switching signal SEL coincides with the value adopted by output 03 in the presence of two equal input signals A and B. It is therefore possible by varying switching signal SEL to test greater-equal or smaller-equal conditions using the same digital comparator 9.

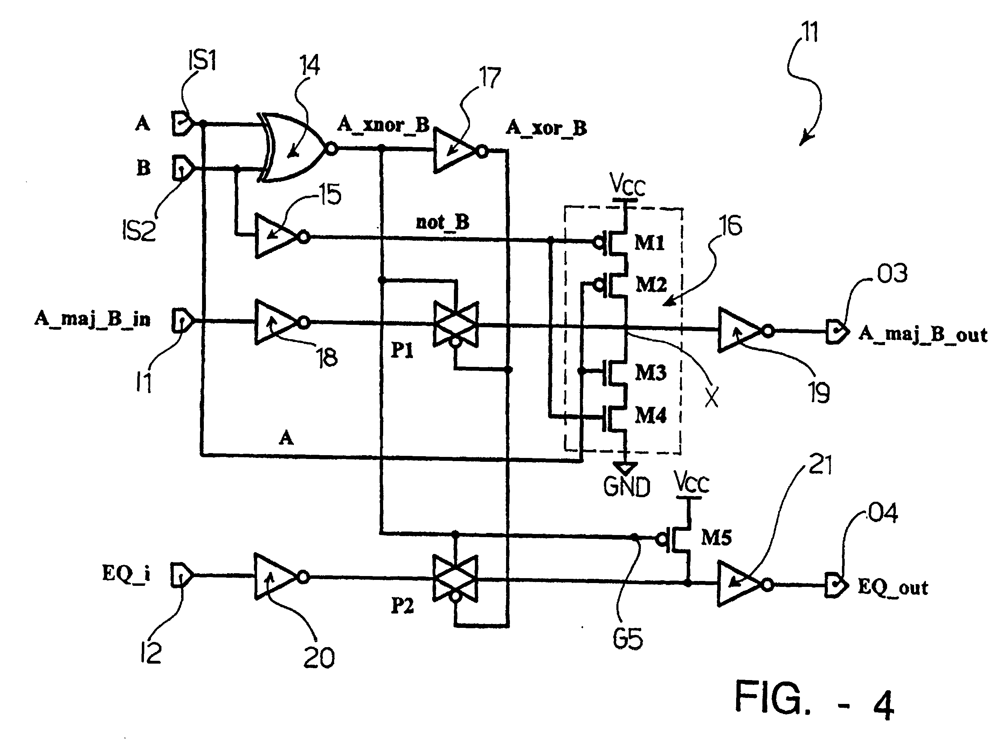

Figure 4 illustrates a variant embodiment of cell 11 according to the invention.

Incremental input I1 is connected to first pass-transistor P1 via a first input buffer 18, while:.incremental output 03 is connected to a central node X of transistor divider 16 via a first output buffer 19.

Similarly, equalising input I2 is connected to pass-transistor P2 via a second input buffer 20, while equalising output O4 is connected to pass-transistor P2 via a second output buffer 21.

In this variant embodiment transistor M5 is a P channel transistor and is inserted between the supply reference voltage Vcc and output buffer 21. In addition to this transistor M5 has its control terminal G5 connected to both pass-transistor P1 and pass-transistor P2.

Advantageously in accordance with this variant embodiment the input and output buffers regenerate the levels of the signals deteriorated by passage through the pass-transistors of cell 11.

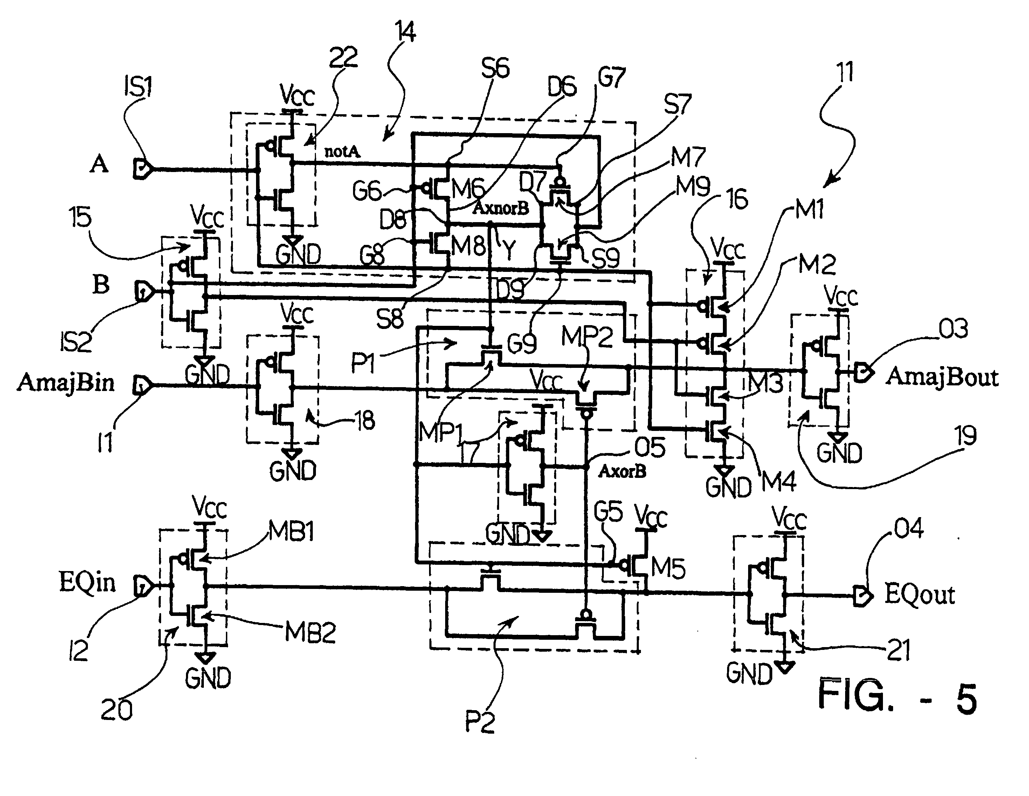

Finally, Figure 5 illustrates in detail the electrical diagram for cell 11 according to the variant embodiment in Figure 4.

All the input and output buffers are constructed using a first P channel MOS transistor MB1 in series with a second N channel MOS transistor MB2, inserted between the supply reference voltage Vcc and earth GND, and having common control terminals, as shown in block 20.

Pass-transistors P1 and P2 comprise a first N-channel MOS transistor MP1 and a second P channel MOS transistor MP2 having drain and source terminals in common and connected to inputs I1 and 12 and outputs 03 and 04 respectively.

In particular the control terminals of the N channel transistors MP1 of pass-transistors P1 and P2 are connected together, to incremental input I1 of cell 11 and output O5 of logic gate 14 via buffer 17, while the control terminals for P channel transistors MP2 are directly connected to output 05.

A possible embodiment of XNOR logic gate 14 comprises an input buffer 22 inserted between supply reference voltage Vcc and earth GND and connected to a first signal input IS1 and source terminal S6 of a first P channel MOS transistor M6.

The source S6 of transistor M6 is also connected to control terminal G7 of a second P channel MOS transistor M7.

Drain terminal D6 of transistor M6 is connected to drain terminal D8 of a third N channel MOS transistor M8, and to the drain terminals D7 and D9 of second transistor M7 and a further fourth N channel MOS transistor M9.

Transistors M6 and M8 have their control terminals G6 and G8 in common and connected to buffer 15, and to common source terminals S7 and S9 of transistors M7 and M9.

Also, fourth transistor M9 has its control terminal G9 connected to the source terminal S8 of third transistor M8 and signal input IS1.

The main advantage of the digital comparator according to the invention comprises the fact that all cells 11 in chain 10, except for the cell relating to the most significant bits which begin the chain, are loaded by identical cells.

The capacity of each basic cell to deliver current can therefore be limited. This is reflected in the possibility of using transistors of smaller size in comparison with those used in devices according to the known art.

The cell relating to the most significant bits must instead be able to pilot standard loads. All this can be achieved simply by suitably dimensioning the regeneration buffer in the variant embodiment of cell 11, shown in Figure 4.

## Claims

1. A digital comparator (9) for comparing a first and a second digital signal (A, B) of a plurality of bits, comprising a chain (10) of cells (11), said chain (10) having a first and a second input terminal (I1, I2) corresponding to input terminals of a first cell of said chain (10) and a first and a second output terminal (OUT3, OUT4) corresponding to output terminals of a last cell of the chain (10), said first output terminal (OUT3) indicating the condition A > B and said second output terminal (OUT4) indicating the condifion A = B, each cell (11) having at least a first and a second input terminal (IS1, IS2) connected to a first and a second data bus (12, 13) receiving said first and second digital signals (A, B) respectively, the cells (11) of said chain (10) are of the same type, and in that each of said identical cells (11) provides for processing one bit of said plurality of bits of said first and second digital signals (A, B), each cell (11) having two input terminals (I1,I2) and two output terminals (O1, O2), each output terminal (O1, O2) being connected to the correponding input terminals (I1,I2) of the next cell in the chain (11), and comprises:
- at least one logic gate (14) having input terminals connected to said input terminals (IS1, IS2) of said cell (11) in order to receive one bit of said first and second digital signals (A, B), respectively and an output terminal (O5) that provides an output signal (A_xnor_B) as result of a XNOR operation between corresponding bits of said first and second digital signals (A, B);
- a first control switch (P1) is connected between a first input terminal (I1) and a first output terminal (O3); and
**characterised in that**
- a second control switch (P2) is connected between a second input terminal (I2) and a second output terminal (O4) ;
said first and second control switches (P1, P2) being driven by said output signal (A_xnor_B) from said at least one logic gate in order to be activated when corresponding bits of said first and second digital signals (A, B) are equal and to transfer values at said first and second input terminals (I1, I2) to said first and second output terminals (O3, O4) respectively,
the initial cell of the chain (10) receiving on said incremental input (I1) a switching signal (SEL) to test greater-equal or smaller-equal conditions.

2. A digital comparator (9) according to, claim 1, **characterised in that** the cells (11) each comprise a transistor divider (16) inserted between a first supply reference voltage (Vcc) and a second reference voltage (GND) and is connected to the said first and second signal inputs (IS1, IS2) of the logic gate (14), an intermediate circuit node (X) of the said transistor divider (16) being connected to said first output (03) of the cell (11).

3. A digital comparator (9) according to claim 2, **characterised in that** the said transistor divider (16) of the cells (11) comprises at least a first, a second, a third and a fourth MOS transistor (M1, M2, M3, M4) in series with each other, said second and third transistors (M2, M3) having control terminals (G2, G3) connected together and to the first signal input (IS1) of the logic gate (14) and the said first and fourth transistors (M1, M4) having control terminals (G1, G4) connected together and to the second signal input (IS2) of the logic gate (14) via a first buffer (15).

4. A digital comparator (9) according to claim 1, **characterised in** each cell (11) further comprises a driving MOS transistor (M5) coupled between the second output (04) of each cell (11) and a second reference voltage (GMD).

5. A digital comparator (9) according to claim 4, **characterised in that** the control gate of the driving MOS transistor (M5) is driven by said output of said at least one logic gate (14).

6. A digital comparator (9) according to claim 1, **characterised in that** each cell (11) comprises a buffer (17) having an input coupled to said output of said at least one logic gate, and having an output coupled to said first and second control switches (P1, P2).

7. A digital comparator (9) according to claim 1, **characterised in that**, in each cell, the first control switch (P1) is connected to the first input (I1) of the cell (11) via a first input buffer (18) and is connected to the first output (O3) of the cell (11) via a third output buffer (19).

8. A digital comparator (9) according to claim 1, **characterised in that**, in each cell, the second control switch (P2) is connected to the second input (I2) of the cell (11) via a second input buffer (20) and to said second output (04) via a second output buffer (21).

9. A digital comparator (9) according to claim 1, **characterised in that** the said first and second control switches (P1, P2) are MOS transistors of the pass-gate type, each comprising at least a first (MP1) and second (P2) MOS transistor having the drain and source terminals connected together.

10. A digital comparator (9) according to claim 1, **characterised in that** each cell (11) of the chain (10), except the last, has its first output (03) connected to the first input (I1) of the subsequent cell in the chain and the second output (O4) connected to the second input (12) of the subsequent cell in the chain.

11. A digital comparator (9) according to claim 10, **characterised in that** the last cell in the chain has its first output (O3) connected to the incremental output (OUT3) of the digital comparator (9) and its second output (04) connected to the equalising output (OUT4) of the digital comparator (9).

12. A digital comparator (9) according to claim 11, **characterised in that** the first cell (11) of the chain (10) receives a voltage value corresponding to a high logic value or logic "1" (Vₛ) at its second input (I2) and receives a switching signal (SEL) at its first input (I1).

13. A method for comparing two digital signals (A, B) by means of a digital comparator (9) as defined in claim 1.

## Patentansprüche

1. Digitaler Komparator (9) zum Vergleichen eines ersten und eines zweiten digitalen Signals (A, B) aus einer Mehrzahl von Bits, der eine Kette (10) aus Zellen (11) aufweist, wobei die Kette (10) einen ersten und einen zweiten Eingangsanschluss (I1, 12), die mit den Eingangsanschlüssen einer ersten Zelle der Kette (10) korrespondieren, und einen ersten und einen zweiten Ausgangsanschluss (OUT3, OUT4), die mit den Ausgangsanschlüssen einer letzten Zelle der Kette (10) korrespondieren, aufweist, wobei der erste Ausgangsanschluss (OUT3) die Bedingung A > B anzeigt und der zweite Ausgangsanschluss (OUT4) die Bedingung A = B anzeigt, wobei jede Zelle (11) mindestens einen ersten und einen zweiten Eingangsanschluss (IS1, IS2) aufweist, die an einen ersten und einen zweiten Datenbus (12, 13) angeschlossen sind, die das erste bzw. das zweite digitale Signal (A, B) empfangen, wobei die Zellen (11) der Kette (10) des gleichen Typs sind und jede der identischen Zellen (11) für die Verarbeitung eines Bits der Mehrzahl von Bits des ersten und des zweiten digitalen Signals (A, B) sorgt, wobei jede Zelle (11) zwei Eingangsanschlüsse (11,12) und zwei Ausgangsanschlüsse (O1, O2) aufweist, wobei jeder Ausgangsanschluss (O1, O2) mit den korrespondierenden Eingangsanschlüssen (11, 12) der nächsten Zelle in der Kette (11) verbunden ist, und wobei der digitale Komparator aufweist:
mindestens ein logisches Gatter (14) mit Eingangsanschlüssen, die mit den Eingangsanschlüssen (IS1, IS2) der Zelle (11) verbunden sind, um ein Bit des ersten bzw. des zweiten digitalen Signals (A, B) zu empfangen, und einem Ausgangsanschluss (05), der ein Ausgangssignal (A_xnor_B) als Ergebnis einer XNOR-Operation zwischen korrespondierenden Bits des ersten und des zweiten digitalen Signals (A, B) bereitstellt;
einen ersten Steuerschalter (P1), der zwischen einem ersten Eingangsanschluss (11) und einem ersten Ausgangsanschluss (03) angeschlossen ist, und
**dadurch gekennzeichnet, dass**
ein zweiter Steuerschalter (P2) zwischen einem zweiten Eingangsanschluss (12) und einem zweiten Ausgangsanschluss (O4) angeschlossen ist;
wobei der erste und der zweite Steuerschalter (P1, P2) durch das Ausgangssignal (A xnor_B) von dem mindestens einem logischen Gatter gesteuert werden, um aktiviert zu werden, wenn korrespondierende Bits des ersten und des zweiten digitalen Signals (A, B) gleich sind, und um Werte von dem ersten und dem zweiten Eingangsanschluss (I1, I2) an den ersten bzw. den zweiten Ausgangsanschluss (O3, O4) zu übertragen,
wobei die Anfangs-Zelle der Kette (10) auf dem Inkrementaleingang (I1) ein Schaltsignal (SEL) empfängt, um die größer gleich oder kleiner gleich Bedingung zu prüfen.

2. Digitaler Komparator (9) nach Anspruch 1, **dadurch gekennzeichnet, dass** die Zellen (11) jeweils einen Transistor-Teiler (16) aufweisen, der zwischen einer ersten Versorgungsreferenzspannung (Vcc) und einer zweiten Referenzspannung (GND) eingefügt ist und mit dem ersten und dem zweiten Signaleingang (IS1, IS2) des logischen Gatters (14) verbunden ist, wobei ein dazwischen liegender Schaltungsknoten (X) des Transistor-Teilers (16) mit dem ersten Ausgang (03) der Zelle (11) verbunden ist.

3. Digitaler Komparator (9) nach Anspruch 2, **dadurch gekennzeichnet, dass** der Transistor-Teiler (16) der Zelle (11) mindestens einen ersten, einen zweiten, einen dritten und einen vierten MOS-Transistor (M1, M2, M3, M4) in Serie zueinander aufweist, wobei der zweite und der dritte Transistor (M2, M3) Steueranschlüsse (G2, G3) aufweist, die miteinander und mit dem ersten Signaleingang (IS1) des logischen Gatters (14) verbunden sind, und wobei der erste und der vierte Transistor (M1, M4) Steueranschlüsse (G1, G4) aufweist, die miteinander und mit dem zweiten Signaleingang (IS2) des logischen Gatters (14) über einen ersten Puffer (15) verbunden sind.

4. Digitaler Komparator (9) nach Anspruch 1, **dadurch gekennzeichnet, dass** jede Zelle (11) ferner einen treibenden MOS-Transistor (M5) aufweist, der zwischen dem zweiten Ausgang (04) jeder Zelle (11) und einer zweiten. Referenzspannung (GND) gekoppelt ist.

5. Digitaler Komparator (9) nach Anspruch 4, **dadurch gekennzeichnet, dass** der Steueranschluss des treibenden MOS-Transistors (M5) durch den Ausgang des mindestens einen logischen Gatters (14) gesteuert ist.

6. Digitaler Komparator (9) nach Anspruch 1, **dadurch gekennzeichnet, dass** jede Zelle (11) einen Puffer (17) mit einem Eingang, der mit dem Ausgang des mindestens einen logischen Gatters gekoppelt ist, und mit einem Ausgarig, der mit dem ersten und dem zweiten Steuerschalter (P1, P2) gekoppelt ist, aufweist.

7. Digitaler Komparator (9) nach Anspruch 1, **dadurch gekennzeichnet, dass** in jeder Zelle der erste Steuerschalter (P1) mit dem ersten Eingang (I1) der Zelle (11) über einen ersten Eingangspuffer (18) verbunden ist und mit dem ersten Ausgang (03) der Zelle (11) über einen dritten Ausgangspuffer (19) verbunden ist.

8. Digitaler Komparator (9) nach Anspruch 1, **dadurch gekennzeichnet, dass** in jeder Zelle der zweite Steuerschalter (P2) mit dem zweiten Eingang (12) der Zelle (11) über einen zweiten Eingangspuffer (20) und mit dem zweiten Ausgang (04) über einen zweiten Ausgangspuffer (21) verbunden ist.

9. Digitaler Komparator (9) nach Anspruch 1, **dadurch gekennzeichnet, dass** der erste und der zweite Steuerschalter (P1, P2) MOS-Transistoren des pass-gate-Typs sind, wobei jeder mindestens einen ersten (MP1) und einen zweiten (P2) MOS-Transistor aufweist, welche die Drain- und Source-Anschlüsse miteinander verbunden haben.

10. Digitaler Komparator (9) nach Anspruch 1, **dadurch gekennzeichnet, dass** jede Zelle (11) der Kette (10), außer der Letzten, ihren ersten Ausgang (O3) mit dem ersten Eingang (11) der folgenden Zelle in der Kette und den zweiten Ausgang (04) mit dem zweiten Eingang (12) der folgenden Zelle in der Kette verbunden hat.

11. Digitaler Komparator (9) nach Anspruch 10, **dadurch gekennzeichnet, dass** die letzte Zelle in der Kette ihren ersten Ausgang (O3) mit dem Inkrementalausgang (OUT3) des digitalen Komparators (9) und ihren zweiten Ausgang (O4) mit dem Ausgleichsausgang (OUT4) des digitalen Komparators (9) verbunden hat.

12. Digitaler Komparator (9) nach Anspruch 11, **dadurch gekennzeichnet, dass** die erste Zelle (11) der Kette (10) einen Spannungswert, der mit einem logisch hohen Wert oder einer logischen "1" (V_{g}) korrespondiert, an ihrem zweiten Eingang (12) empfängt und ein Schaltsignal (SEL) an ihrem ersten Eingang (I1) empfängt.

13. Verfahren zum Vergleichen zweier digitaler Signale (A, B) mittels eines digitalen Komparators (9) wie definiert in Anspruch 1.

## Revendications

1. Un comparateur numérique (9) pour comparer un premier et un second signal numérique (A, B) d'une pluralité de bits, comprenant une chaîne (10) de cellules (11), cette chaîne (10) ayant une première et une seconde borne d'entrée (I1, I2) correspondant à des bornes d'entrée d'une première cellule de la chaîne (10) et une première et une seconde borne de sortie (OUT3, OUT4) correspondant à des bornes de sortie d'une dernière cellule de la chaîne (10), la première borne de sortie (OUT3) indiquant la condition A > B et la seconde borne de sortie (OUT4) indiquant la condition A = B, chaque cellule (11) ayant au moins une première et une seconde borne d'entrée (IS1, IS2) connectées à un premier et à un second bus de données (12, 13) recevant le premier et le second signal numérique (A, B) respectivement, les cellules (11) de la chaîne (10) étant du même type, et chacune de ces cellules identiques (11) assurent le traitement d'un bit de ladite pluralité de bits du premier et du second signal numérique (A, B), chaque cellule (11) possédant deux bornes d'entrée (I1, I2) et deux bornes de sortie (O1, O2), chaque borne de sortie (O1, O2) étant reliée aux bornes d'entrée correspondantes (I1, I2) de la cellule suivante de la chaîne (11), et comprenant :
- au moins une porte logique (14) possédant des bornes d'entrée reliées auxdites bornes d'entrée (IS1, IS2) de la cellule (11) afin de recevoir un bit du premier et du second signal numérique (A,B), respectivement, et une borne de sortie (O5) qui délivre un signal de sortie (A_xnor_B) qui est le résultat d'une opération NI-exclusif entre des bits correspondants du premier et du second signal numérique (A, B) ;
- un premier commutateur de commande (P1) connecté entre une première borne d'entrée (I1) et une première borne de sortie (O3) ; et
**caractérisé en ce que** :
- un second commutateur de commande (P2) est connecté entre une seconde borne d'entrée (12) et une seconde borne de sortie (O4) ;
le premier et le second commutateur de commande (P1, P2) étant pilotés par ledit signal de sortie (A_xnor_B) provenant ladite au moins une porte logique afin d'être activé lorsque les bits correspondants du premier et du second signal numérique (A, B) sont égaux et pour transférer des valeurs sur lesdites première et seconde bornes d'entrée (I1, I2) vers lesdites première et seconde bornes de sortie (O3, O4), respectivement,
la cellule initiale de la chaîne (10) recevant sur ladite entrée incrémentale (I1) un signal de commutation (SEL) pour tester des conditions supérieur-ou-égal, ou inférieur-ou-égal.

2. Un comparateur numérique (9) selon la revendication 1, **caractérisé en ce que** les cellules (11) comprennent chacune un diviseur à transistor (16) inséré entre une première tension de référence d'alimentation (Vcc) et une seconde tension de référence (GND) et qui est reliée auxdites première et seconde entrées de signal (IS1, IS2) de la porte logique (14), un noeud de circuit intermédiaire (X) dudit diviseur à transistor (16) étant connecté à ladite première sortie (O3).

3. Un comparateur numérique (9) selon la revendication 2, **caractérisé en ce que** ledit diviseur à transistor (16) des cellules (11) comprend au moins un premier, un second, un troisième et un quatrième transistor MOS (M1, M2, M3, M4) en série entre eux, lesdits second et troisième transistors (M2, M3) possédant des bornes de commande (G2, G3) connectées ensemble et à la première entrée de signal (IS1) de la porte logique (14) et lesdits premier et quatrième transistors (M1, M4) possédant des bornes de commande (G1, G4) connectées ensemble et à la seconde entrée de signal (IS2) de la porte logique (14) via un premier tampon (15).

4. Un comparateur numérique (9) selon la revendication 1, **caractérisé en ce que** chaque cellule (11) comprend en outre un transistor MOS de pilotage (M5) couplé entre la seconde sortie (04) de chaque cellule (11) et une seconde tension de référence (GND).

5. Un comparateur numérique (9) selon la revendication 4, **caractérisé en ce que** la grille de commande du transistor MOS de pilotage (M5) est pilotée par ladite sortie de ladite au moins une porte logique (14).

6. Un comparateur numérique (9) selon la revendication 1, **caractérisé en ce que** chaque cellule (11) comprend un tampon (17) possédant une entrée couplée à ladite sortie de ladite au moins une porte logique, et comportant une sortie couplée auxdits premier et second commutateurs de commande (P1, P2).

7. Un comparateur numérique (9) selon la revendication 1, **caractérisé en ce que**, dans chaque cellule, le premier commutateur de commande (P1) est connecté à la première entrée (I1) de la cellule (11) via un premier tampon d'entrée (18) et est connecté à la première sortie (03) de la cellule (11) via un troisième tampon de sortie (19).

8. Un comparateur numérique (9) selon la revendication 1, **caractérisé en ce que**, dans chaque cellule, le second commutateur de commande (P2) est connecté à la seconde entrée (12) de la cellule (11) via un second tampon d'entrée (20) et à ladite seconde sortie (04) via un second tampon de sortie (21).

9. Un comparateur numérique (9) selon la revendication 1, **caractérisé en ce que** lesdits premier et second commutateurs de commande (P1, P2) sont des transistors MOS du type à grille passante, chacun comprenant au moins un premier (MP1) et un second (P2) transistor MOS dont les bornes de drain et de source sont connectées ensemble.

10. Un comparateur numérique (9) selon la revendication 1, **caractérisé en ce que** chaque cellule (11) de la chaîne (10), à l'exception de la dernière, a sa première sortie (03) connectée à la première entrée (I1) de la cellule suivante de la chaîne et la seconde sortie (04) connectée à la seconde entrée (12) de la cellule suivante de la chaîne.

11. Un comparateur numérique (9) selon la revendication 10, **caractérisé en ce que** la dernière cellule dé la chaîne a sa première sortie (03) connectée à la sortie incrémentale (OUT3) du comparateur numérique (9) et sa seconde sortie (04) connectée à la sortie d'égalisation (OUT4) du comparateur numérique (9).

12. Un comparateur numérique (9) selon la revendication 11, **caractérisé en ce que** la première cellule (11) de la chaîne (10) reçoit une valeur de tension correspondant à une valeur logique haute ou "1" logique (Vs) sur sa seconde entrée (12) et reçoit un signal de commutation (SEL) sur sa première entrée (I1).

13. Un procédé pour comparer deux signaux numériques (A, B) au moyen d'un comparateur numérique (9) tel que défini dans la revendication 1.
